# EUROPÄISCHE PATENTSCHRIFT

(11) **EP 3 489 800 B1**
(45) Veröffentlichungstag und Bekanntmachung des Hinweises auf die Patenterteilung: **03.06.2026**
(21) Anmeldenummer: 17203902.6
(22) Anmeldetag: 27.11.2017
(51) Int. Cl.: G06F 3/01, G06F 21/30, G07C 9/00, G02B 27/01

(54) **SICHERHEITSSYSTEM**
SAFETY SYSTEM
SYSTÈME DE SÉCURITÉ

(43) Veröffentlichungstag der Anmeldung: 29.05.2019
(73) Patentinhaber: EUCHNER GmbH + Co. KG, 70771 Leinfelden-Echterdingen (DE)
(72) Erfinder: Schmid, Dominik, 72663 Großbettlingen (DE)
(74) Vertreter: Ruckh, Rainer Gerhard

(56) Entgegenhaltungen:
- WO-A1-2015/085434
- US-A1- 2006 241 792
- US-A1- 2013 069 985
- US-A1- 2015 185 825
- US-A1- 2017 262 150

## Beschreibung

Die Erfindung betrifft ein Sicherheitszuhaltesystem.

Ein derartiges Sicherheitszuhaltesystem dient generell zur Bereitstellung von Sicherheitsfunktionen für eine Anlage. Mit dem Begriff Anlage sind generell auch Teile von Anlagen oder diesen zugeordnete Einheiten umfasst. Eine Anlage kann dabei insbesondere auch eine Maschine oder ein Gerät sein. Generell kann von einer solchen Anlage eine Gefährdung ausgehen. Mit dem Sicherheitszuhaltesystem wird die Anlage derart gesichert, dass insbesondere Personenschäden bei dem Betrieb der Anlage sicher vermieden werden.

Das Sicherheitszuhaltesystem sichert allgemein den Zugang zu einer Anlage. Beispielsweise kann die Anlage von einer Umzäunung umgeben sein, wobei in der Umzäunung eine trennende Schutzeinrichtung wie zum Beispiel eine Schutztür vorgesehen ist. Mit dem Sicherheitszuhaltesystem wird die Schutztür sicher zugehalten, so dass während des Betriebs der Anlage, der eine Gefährdung für Personen bedeuten kann, kein Zugang zur Anlage durch die Schutztür möglich ist. Die mit dem Sicherheitszuhaltesystem bewirkte Zuhaltung der Schutztür wird nur dann aufgehoben, wenn die Anlage stillsteht oder in einem Betriebsmodus läuft, in welchem von der Anlage keine Gefährdungen ausgehen.

Der Betrieb der Anlage wird generell von einer Steuerung gesichert, die je nach Ausbildung aus einer oder mehreren Rechnereinheiten bestehen kann.

Zur Einstellung von Prozessgrößen der Anlage sind der Steuerung typischerweise Bedienelemente zugeordnet. Die Bedienelemente können von Tasten, Drehknöpfen und sonstigen Einstellmitteln gebildet sein.

Die US 2015/0185825 A1 betrifft ein System mit einer einer Maschine zugeordneten virtuellen Benutzer-Schnittstelle, die insbesondere als Erweiterte-Realität-Einheit ausgebildet ist. In einem Einlernprozess werden der Erweiterte-Realität-Einheit Daten der Maschine zugeordnet, so dass mit dieser anhand derer Seriennummern die Maschine erkannt werden kann. Mit der Erweiterte-Realität-Einheit können virtuell Bedienelemente angezeigt werden, anhand derer Maschinenfunktionen ausgelöst werden können.

Die US 2017/0262150 A1 betrifft eine von einem Benutzer am Kopf tragbare Erweiterte-Realität-Einheit. Mit dieser können Einrichtungen in der Umgebung identifiziert werden, um dann virtuelle Anzeigen zu aktivieren, die zur Interaktion mit den Einrichtungen generiert werden können.

Die US 2006/0241792 A1 betrifft eine Erweiterte-Realität-Einheit, die ein Benutzer im Bereich eines Kopfs mit sich führen kann. Mittels der Erweiterte-Realität-Einheit können Einheiten und Vorrichtungen durch Lesen von Identifikationscode identifiziert werden. Weiterhin ist ein tragbarer Computer vorgesehen, den der Benutzer mit sich führt. In dem Computer ist eine Software implementiert, mittels derer der Benutzer Informationen signalisieren kann oder Prozesse auslösen kann.

Die WO 2015/085434 A1 betrifft ein Zugangskontrollsystem mit einem elektronischen Schloss, das ein Benutzer mittels einer Erweiterte-Realität-Einheit öffnen kann. Die Erweiterte-Realität-Einheit weist eine Kamera auf, mittels derer Identifikations-Informationen des Schlosses ermittelt werden können.

Die US 2013 / 0069985 A1 betrifft eine erweiterte Realitäts-Einheit in Form einer Brille. In das Sichtfeld der Brille können Daten, insbesondere Bilder eingeblendet werden, die auf ein Zielobjekt bezogen sind. Damit kann das Zielobjekt kontrolliert werden. Das Zielobjekt kann ein Garagentor sein.

Der Erfindung liegt die Aufgabe zugrunde, ein Sicherheitszuhaltesystem bereitzustellen, welches eine hohe Funktionalität und Bedienerfreundlichkeit aufweist.

Die Erfindung betrifft ein Sicherheitszuhaltesystem mit wenigstens einem Sicherheitsmodul. Das Sicherheitsmodul ist einer von einer Steuerung gesteuerten Anlage zugeordnet. Vorgesehen ist eine tragbare Erweiterte-Realität-Einheit. Die Erweiterte-Realität-Einheit weist eine Kamera und eine Projektionseinheit auf. Das Sicherheitsmodul weist ein Verbindungsmodul auf. Das Verbindungsmodul ist ausgebildet, eine Datenverbindung mit der Erweiterte-Realität-Einheit und weiterhin eine Datenverbindung mit der Steuerung bereitzustellen. Mit der Erweiterte-Realität-Einheit wird ein die Anlage kennzeichnender Code erfasst und an das Verbindungsmodul übertragen. Abhängig vom erfassten Code der Erweiterte-Realität-Einheit sind Kenngrößen von Bedienelementen zugeführt. Anhand der Kenngrößen sind die Bedienelemente mit der Projektionseinheit der Erweiterte-Realität-Einheit visualisiert. Betätigungen der virtuellen Bedienelemente sind mittels der Erweiterte-Realität-Einheit erfasst und daraus sind Betätigungsdaten generiert. Eine Übertragung der Betätigungsdaten erfolgt über das Verbindungsmodul an die Steuerung. Im Sicherheitssystem sind selbsttätig Einstellungen in Abhängigkeit der Betätigungsdaten durchgeführt. Betätigungen der virtuellen Bedienelemente sind mittels der Erweiterte-Realität-Einheit erfasst. Daraus sind Betätigungsdaten generiert. Eine Übertragung der Betätigungsdaten erfolgt über das Verbindungsmodul an die Steuerung, wobei im Sicherheitssystem selbsttätig Einstellungen in Abhängigkeit der Betätigungsdaten durchgeführt sind. Das Sicherheitssystem weist ein Busmodul auf, über welches eine Datenverbindung zwischen dem Verbindungsmodul und der Steuerung gebildet wird.

Erfindungsgemäß wird somit ein System und ein Verfahren bereitgestellt, welches eine bedienerfreundliche Einstellung von Prozessgrößen eines Sicherheitssystems ermöglicht, welches erfindungsgemäß ein Sicherheitszuhaltesystem ausbildet.

Für diese Einstellung sind erfindungsgemäß eine Erweiterte-Realität-Einheit und ein im oder am Sicherheitsmodul vorgesehenes Verbindungsmodul vorgesehen.

Die Erweiterte-Realität-Einheit bildet eine Einheit, die von einem Benutzer getragen werden kann, das heißt der Benutzer kann die Erweiterte-Realität-Einheit mit sich führen und kann so flexibel mit der Erweiterte-Realität-Einheit eine Einstellung von Prozessgrößen von Anlagen oder Teilen von Anlagen vornehmen.

Generell setzt der Benutzer die Erweiterte-Realität-Einheit auf seinen Kopf auf, so dass er durch die Erweiterte-Realität-Einheit ein Umgebungsbild sehen kann. In dieses Umgebungsbild können virtuelle Informationen eingeblendet werden, die der Benutzer zur Einstellung der Prozessgrößen nutzen kann. Insbesondere kann die Erweiterte-Realität-Einheit in Form einer Datenbrille ausgebildet sein. Weiterhin kann die Erweiterte-Realität-Einheit in Form von Eye Tabs, Kontaktlinsen und dergleichen ausgebildet sein.

Mit der Erweiterte-Realität-Einheit wird eine komfortable Benutzeroberfläche geschaffen, die die bislang erforderliche Hardware zur Ausbildung von Bedienelementen des Sicherheitssystems überflüssig macht.

Da somit eine aufwändige Hardware von Bedienelementen im Sicherheitssystem eingespart werden kann, ergibt sich ein signifikanter Kostenvorteil des Gesamtsystems. Auch können dadurch Varianten des Gesamtsystems leicht geändert oder sogar eingespart werden.

Insbesondere vereinfacht sich der Aufbau der sicherheitsrelevanten Komponenten des Sicherheitssystems. Während bei bekannten Sicherheitssystemen Sicherheitsmodule mit Bedienelementen wie Tasten vorgesehen werden mussten, entfällt dieser Aufwand bei dem erfindungsgemäßen Sicherheitssystem.

Derartige Bedienelemente weisen, sofern diese als nicht kapazitive Bedienelemente ausgebildet sind, eine begrenzte Lebensdauer auf. Bedienelemente in Form von kapazitiven Elementen sind dagegen nur mit Mühe und Hilfsmitteln wie speziellen Handschuhen handhabbar.

Da bei dem erfindungsgemäßen Sicherheitssystem keine derartige Bedienelemente benötigt werden, wird die Lebensdauer des Sicherheitssystems und zudem der Bedienkomfort wesentlich erhöht.

Die mit der Erweiterte-Realität-Einheit generierte Darstellung virtueller Bedienelemente wird vom Benutzer zur Einstellung von Prozessgrößen genutzt, wobei die dadurch generierten Betätigungsdaten an die Steuerung der Anlage weitergegeben werden, um dort entsprechende Einstellungen vorzunehmen. Damit wird ein völlig entsprechender Einstellvorgang realisiert, wie er bei Einsatz realer Bedienelementen, wie Tasten am Sicherheitsmodul, erfolgen würde. Das heißt, dass mit den von der Erweiterte-Realität-Einheit generierten virtuellen Bedienelementen reale, hardwaremäßig vorgesehene Bedienelemente am Sicherheitsmodul vollständig und gleichwertig ersetzt werden können.

Weiter vorteilhaft ist, dass für die erfindungsgemäße Prozessgrößeneinstellung auch bereits vorhandene Komponenten des Sicherheitssystems, die insbesondere zur Kommunikation mit der Steuerung dienen, mitgenutzt werden können, wodurch ein weiterer Rationalisierungseffekt erzielt wird.

Die Erweiterte-Realität-Einheit weist als wesentliche Komponenten eine Kamera und eine Projektionseinheit auf. Weiterhin weist die Erweiterte-Realität-Einheit Mittel zur Ausbildung einer Datenverbindung mit dem Verbindungsmodul auf. Generell erfolgt zwischen dem Verbindungsmodul und der Erweiterte-Realität-Einheit eine nicht drahtgebundene Datenübertragung. Vorzugsweise ist die Datenverbindung in Form einer WLAN-Verbindung, Bluetooth-Verbindung oder dergleichen, ausgebildet.

In einem ersten Schritt wird mit der Erweiterte-Realität-Einheit die jeweilige Anlage derart identifiziert, dass mit der Kamera ein die Anlage kennzeichnender Code erfasst wird. Da der die Erweiterte-Realität-Einheit tragende Benutzer ein Umgebungsbild durch die Erweiterte-Realität-Einheit sieht, kann er den Code einfach ausfindig machen. Mittels der Kamera wird dann der im Umgebungsbild sichtbare und damit auch im Sichtfeld der Kamera liegende Code erfasst und dekodiert. Der Code kann beispielsweise von einem QR-Code, Matrix-Code oder Barcode gebildet sein.

Der dekodierte Code wird von der Erweiterte-Realität-Einheit an das Verbindungsmodul übertragen und dort vorzugsweise abgespeichert.

Da mit der Erfassung des Codes die Anlage oder das Verbindungsmodul identifiziert ist, werden für diese Anlage passend Kenngrößen vom Bedienelement des Sicherheitssystems an die Erweiterte-Realität-Einheit gesendet.

Generell können diese Kenngrößen im Verbindungsmodul hinterlegt sein. Besonders vorteilhaft weist das Verbindungsmodul eine Schnittstelle an eine externe Einheit auf, so dass die Kenngrößen von der externen Einheit eingelesen werden. In beiden Fällen erhält dann die Erweiterte-Realität-Einheit die Kenngrößen vom Verbindungsmodul. Die Schnittstelle kann dabei als Internetanschluss ausgebildet sein. Prinzipiell könnte sogar die Erweiterte-Realität-Einheit eine solche Schnittstelle aufweisen, sodass die Kenngrößen direkt von der externen Einheit in die Erweiterte-Realität-Einheit übertragen werden.

Anhand der Kenngrößen generiert dann die Projektionseinheit der Erweiterte-Realität-Einheit ein Bild von Bedienelementen, das in das Umgebungsbild der Erweiterte-Realität-Einheit eingeblendet wird. Somit entsteht eine für den Benutzer sichtbare Darstellung virtueller Bedienelemente.

Der Benutzer kann dann, beispielsweise mit einer Gestensteuerung, die virtuellen Bedienelemente betätigen, was in der Erweiterte-Realität-Einheit erfasst und ausgewertet wird. Dadurch werden Betätigungsdaten generiert, die über das Sicherheitsmodul an die Steuerung übertragen werden, sodass entsprechende Einstellungen vorgenommen werden können.

Das Sicherheitssystem, insbesondere dessen Sicherheitsmodul brauchen somit nicht mehr hardwaremäßig mit Bedienelementen ausgestattet werden, um anhand der manuellen Betätigung solcher Bedienelemente Einstellungen des Sicherheitssystems, insbesondere in der Steuerung der Anlage, durchzuführen. Vielmehr wird eine derartige Hardware von Bedienelementen an Komponenten des Sicherheitssystems durch eine virtuelle Einstellung über die Erweiterte-Realität-Einheit ersetzt.

Die Kommunikation des oder der Sicherheitsmodule erfolgt generell über ein Busmodul, das Bestandteil des Sicherheitssystems ist. Über das Busmodul wird eine Datenverbindung zwischen dem Verbindungsmodul und der Steuerung gebildet.

Für die Datenübertragung über diese Datenverbindung ist im Verbindungsmodul eine das Sicherheitssystem kennzeichnende Kennung hinterlegt, welche mit der Steuerung abgleichbar ist.

Dabei ist im Verbindungsmodul die Kennung dem von der Erweiterte-Realität-Einheit gelesenen Code zugeordnet.

Das Verbindungsmodul bildet somit ein Verbindungsglied zwischen der Erweiterte-Realität-Einheit einerseits und der Steuerung andererseits.

Insbesondere ist im Busmodul ein Datenprotokoll des Verbindungsmoduls zur Kommunikation mit der Erweiterte-Realität-Einheit in ein Datenprotokoll zur Kommunikation mit der Steuerung umgesetzt.

Für diesen Datentransfer von der Erweiterte-Realität-Einheit über das Verbindungsmodul zur Steuerung wird die Zuordnung der Kennung zum von der Erweiterte-Realität-Einheit ermittelten Code genutzt.

Generell kann die Zuordnung der Kennung zu dem Code auch für eine weitere, detailliertere Identifizierung des Sicherheitssystems mit der Anlage genutzt werden.

Im einfachsten Fall reicht der mit der Erweiterte-Realität-Einheit erfasste Code zur Identifizierung der Anlage und zur Bestimmung der dieser zugeordneten Kenngrößen für Bedienelemente zur Prozessgrößeneinstellung aus. Für den Fall, dass der Anlage unterschiedliche Sicherheitskomponenten des Sicherheitssystems derart zugeordnet werden können, dass unterschiedliche Bedienelementausführungen möglich sind, wird der Code zusammen mit der Kennung benutzt, um für das jeweilige Sicherheitssystem die passenden Kenngrößen von Bedienelementen vom Verbindungsmodul an die Erweiterte-Realität-Einheit zu übermitteln, damit dann mit der Erweiterte-Realität-Einheit die entsprechenden virtuellen Bedienelemente visualisiert werden können.

Gemäß einer vorteilhaften Ausführungsform bildet das Verbindungsmodul ein Submodul eines Sicherheitsmoduls.

Dieses Submodul bildet somit eine Komponente eines Sicherheitsmoduls, und kann so in das Sicherheitssystem integriert werden.

Besonders vorteilhaft ist das Verbindungsmodul mit dem Sicherheitsmodul verbindbar.

Insbesondere kann das Verbindungsmodul am Sicherheitsmodul aufgesteckt werden, wodurch das Verbindungsmodul mit dem Sicherheitsmodul selbsttätig elektrisch kontaktiert ist.

Die Erfindung wird im Folgenden anhand der Zeichnungen erläutert. Es zeigen:
- Figur 1:: Schematische Darstellung eines Ausführungsbeispiels des erfindungsgemäßen Sicherheitssystems.
- Figur 2:: Schematische Darstellung eines Sicherheitssystems in Form eines Sicherheitszuhaltesystems.

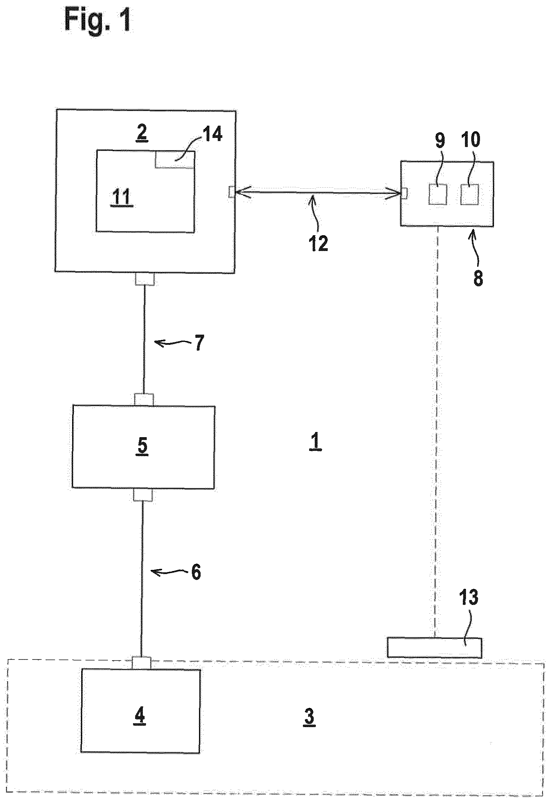

Figur 1 zeigt schematisch ein Ausführungsbeispiel des erfindungsgemäßen Sicherheitssystems 1. Das Sicherheitssystem 1 weist ein Sicherheitsmodul 2, mit dem eine Sicherheitsfunktion für eine Anlage 3 bereitgestellt wird, die von einer Steuerung 4 gesteuert wird, auf. Der Begriff Anlage 3 umfasst generell auch Maschinen oder automatisierte Geräte. Die Steuerung 4 kann beispielsweise aus einer SPS-Steuerung gebildet sein.

Bei der in Figur 1 dargestellten Ausführungsform umfasst das Sicherheitssystem 1 ein Sicherheitsmodul 2. Generell können auch mehrere Sicherheitsmodule 2 vorgesehen sein. Die mit dem oder den Sicherheitsmodulen 2 ausgeübten Sicherheitsfunktionen sind typischerweise Überwachungsfunktionen, mit denen sichergestellt ist, dass von der Anlage 3 keine Gefahren für Personen ausgehen.

Das Sicherheitssystem 1 umfasst weiterhin ein Busmodul 5, über welches ein Datenaustausch zwischen dem Sicherheitsmodul 2 und der Steuerung 4 erfolgt.

Zwischen dem Busmodul 5 und der Steuerung 4, ist eine Datenverbindung 6 vorgesehen, wobei diese im vorliegenden Fall von einer Ethernet-Verbindung gebildet ist.

Zwischen dem Busmodul 5 und dem Sicherheitsmodul 2 ist eine weitere Datenverbindung 7 vorgesehen.

Generell werden für die Datenübertragungen über die Datenverbindungen 6, 7 zwischen Sicherheitsmodul 2 und Busmodul 5 einerseits und dem Busmodul 5 und der Steuerung 4 andererseits unterschiedliche Datenprotokolle verwendet.

Das Busmodul 5 sorgt dann für eine Umsetzung dieser Datenprotokolle, sodass ein Datenaustausch zwischen Sicherheitsmodul 2 und Steuerung 4 über das Busmodul 5 ermöglicht ist. Zur Identifizierung des Sicherheitsmoduls 2 ist eine Kennung vorgesehen, die sowohl im Sicherheitsmodul 2 als auch in der Steuerung 4 hinterlegt ist und welche zur Kommunikation zwischen Sicherheitsmodul 2 und Steuerung 4 verwendet wird.

Zur Einstellung von Prozessgrößen brauchen am Sicherheitsmodul 2 keine Bedienelemente wie Tasten und dergleichen vorgesehen sein. Erfindungsgemäß ist anstelle derartiger Bedienelemente eine Erweiterte-Realität-Einheit 8 vorgesehen, die in Form einer Datenbrille oder ähnlichem ausgebildet ist und von einem Benutzer getragen werden kann. In der Erweiterte-Realität-Einheit 8 ist eine Kamera 9 und eine Projektionseinheit 10 integriert.

Der die Erweiterte-Realität-Einheit 8 tragende Benutzer sieht ein Umgebungsbild, in welches mit der Projektionseinheit 10 Informationen eingeblendet werden können, das heißt dem realen Umgebungsbild wird ein virtuelles sichtbares Bild überlagert.

Das Sicherheitsmodul 2 weist ein Verbindungsmodul 11 auf. Das Verbindungsmodul 11 bildet ein Submodul des Sicherheitsmoduls 2 und kann auf dieses aufgesteckt werden, wodurch das Verbindungsmodul 11 selbsttätig mit dem Sicherheitsmodul 2 elektrisch kontaktiert ist.

Zwischen dem Verbindungsmodul 11 und der Erweiterte-Realität-Einheit 8 wird selbsttätig eine berührungslose Datenverbindung 12 in Form einer WLAN-Verbindung, Bluetooth-Verbindung oder dergleichen ausgebildet, wobei hierzu sowohl im Verbindungsmodul 11 als auch in der Erweiterte-Realität-Einheit 8 die erforderlichen Datenübertragungsmittel integriert sind.

Mit der Erweiterte-Realität-Einheit 8 und dem Verbindungsmodul 11 erfolgt erfindungsgemäß eine Prozessgrößeneinstellung für das Sicherheitssystem 1.

Hierzu wird zunächst mit der Kamera 9 der Erweiterte-Realität-Einheit 8 ein an der Anlage 3 angebrachter QR-Code 13 erfasst. Anstelle eines QR-Codes 13 kann auch ein Matrix-Code, ein Barcode oder dergleichen vorgesehen sein.

Der im QR-Code 13 enthaltene Code, das heißt dessen Codeinformation wird von der Erweiterte-Realität-Einheit 8 an das Verbindungsmodul 11 übertragen. Im Verbindungsmodul 11 wird der Code zusammen mit der das Sicherheitssystem 1 kennzeichnenden Kennung abgespeichert, so dass eine Zuordnung zwischen diesen Elementen gegeben ist.

Anhand des Codes und der Kennung sind die Anlage 3 und auch die das Sicherheitssystem 1 bildenden Sicherheitskomponenten identifiziert.

Von dem Verbindungsmodul 11 werden anhand des Codes und der Kennung passend für die Anlage 3 Kenngrößen für Bedienelemente, die insbesondere dem oder den Sicherheitsmodulen 2 zugeordnet sind, an die Erweiterte-Realität-Einheit 8 übertragen. Prinzipiell können diese Kenngrößen im Verbindungsmodul 11 selbst hinterlegt sein. Besonders vorteilhaft weist das Verbindungsmodul 11 eine Schnittstelle 14 zum Anschluss an eine externe Einheit auf, wo diese Kenngrößen hinterlegt sind. Nachdem im Verbindungsmodul 11 der Code der Anlage 3 bekannt ist, kann das Verbindungsmodul 11 über die Schnittstelle 14 die Kenngrößen von der externen Einheit einlesen. Die Schnittstelle 14 kann insbesondere als Anschluss an das Internet ausgebildet sein.

Anhand der vom Verbindungsmodul 11 an die Erweiterte-Realität-Einheit 8 übertragenen Kenngrößen von Bedienelementen wird mittels der Projektionseinheit 10 der Erweiterte-Realität-Einheit 8 ein virtuelles Bild der Bedienelemente generiert und dem Umgebungsbild, das der Benutzer durch die Erweiterte-Realität-Einheit 8 sieht, überlagert. Der Benutzer sieht damit virtuelle Bedienelemente in der Umgebung. Diese virtuellen Bedienelemente können in Form von Tasten, Drehknöpfen oder dergleichen gebildet sein. Die virtuellen Bedienelemente können vom Benutzer, insbesondere durch eine Gestensteuerung, bedient werden. Beispielsweise führt der Benutzer einen Finger auf ein Bedienelement in Form einer Taste. Die Kamera 9 der Erweiterte-Realität-Einheit 8 erfasst dies und die Erweiterte-Realität-Einheit 8 interpretiert dies als Bedienung des Bedienelements, insbesondere als Drücken der Taste.

Da in der Erweiterte-Realität-Einheit 8 die Kenngrößen der Bedienelemente hinterlegt sind, werden in dieser durch das registrierte Betätigen des Bedienelements entsprechende Betätigungsdaten generiert, das heißt es werden exakt dieselben Betätigungsdaten generiert, als wenn ein Benutzer ein reales, hardwaremäßig an einem Sicherheitsmodul 2 vorgesehenes Bedienelement betätigt hätte.

Diese Betätigungsdaten werden von der Erweiterte-Realität-Einheit 8 an das Verbindungsmodul 11 gesendet. Das Verbindungsmodul 11 sendet die Betätigungsdaten über das Busmodul 5 an die Steuerung 4. Dabei wird im Verbindungsmodul 11 die Zuordnung des Codes zur Kennung genutzt, um dann unter der Kennung die Betätigungsdaten über das Busmodul 5 an die Steuerung 4 zu senden, um dann entsprechend der Betätigungsdaten, das heißt entsprechend der Betätigung der virtuellen Bedienelemente, die mit der Erweiterte-Realität-Einheit 8 erzeugt werden, eine Einstellung von Prozessgrößen vorzunehmen.

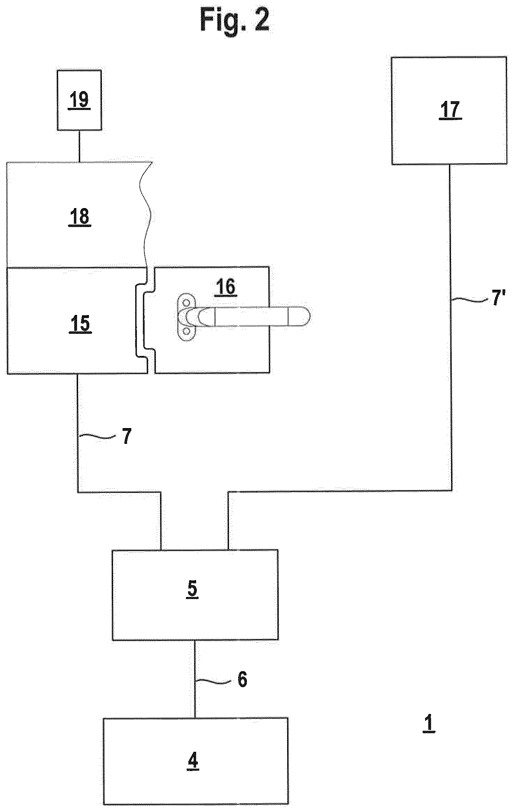

Figur 2 zeigt die Sicherheitskomponenten eines Sicherheitssystems 1 in Form eines Sicherheitszuhaltesystems. Mit dem Sicherheitszuhaltesystem erfolgt eine sichere Zuhaltung einer trennenden Schutzeinrichtung, wie zum Beispiel einer Schutztür. Die Schutztür ist beispielsweise in einer Umzäunung integriert, die einen Gefahrenbereich dieser Anlage 3 umgibt. Eine Person kann somit nur durch die Schutztür zur Anlage 3 gelangen.

Während eines Arbeitsbetriebs, bei welchem Gefährdungen für Personen von der Anlage 3 ausgehen können, ist mittels des Sicherheitszuhaltesystems die Schutztür zugehalten, so dass kein Zugang zum Gefahrenbereich möglich ist. Nur wenn die Anlage 3 stillsteht oder in einem Betriebsmodus läuft, in dem keine Gefahren für Personen von der Anlage 3 ausgehen, wird mit dem Sicherheitszuhaltesystem die Zuhaltung der Schutztür aufgehoben und ein Zugang zum Gefahrenbereich durch die Schutztür ist freigegeben.

Das Sicherheitszuhaltesystem gemäß Figur 2 umfasst ein Grundmodul 15 und ein Griffmodul 16. Das Griffmodul 16 ist an der Schutztür angeordnet. Das Grundmodul 15 ist an einem die Schutztür umgebenden Rahmen angeordnet.

Vorteilhaft werden mit der Projektionseinheit 10 der Erweiterte-Realität-Einheit 8 die virtuellen Bedienelemente im Bereich des Grundmoduls 15 oder in dessen Nähe visualisiert.

Ist die Schutztür in ihrer Schließstellung, liegt das Griffmodul 16 wie in Figur 2 dargestellt am Grundmodul 15 an. Das Grundmodul 15 enthält Zuhaltemittel, mittels derer eine Zuhaltung bewirkt werden kann, das heißt ein sicheres Halten des Griffmoduls 16 in der in Figur 2 dargestellten Schließstellung.

Das Grundmodul 15 ist über die Datenverbindung 6 an das Busmodul 5 angeschlossen, wobei das Busmodul 5 selbst über die Datenverbindung 7 mit der Steuerung 4 der Anlage 3 verbunden ist.

Das Sicherheitszuhaltesystem umfasst weiterhin ein Erweiterungsmodul 17, das ein Sicherheits-I/0-Modul ausbildet, das heißt ein sicheres Modul zur Bereitstellung von Ein- und Ausgängen bildet. Das Erweiterungsmodul 17 ist über eine Datenverbindung 7' mit dem Busmodul verbunden.

Weiterhin umfasst das Sicherheitszuhaltesystem ein an das Grundmodul 15 angeschlossenes Erweiterungsmodul 18, das zum Anschluss von peripheren Einheiten wie Signalgebern 19 dient. Das Erweiterungsmodul 18 ist optional, das heißt es muss nicht zwingend im Sicherheitszuhaltesystem vorgesehen sein.

Das in Figur 2 nicht dargestellte Verbindungsmodul 11 kann als Submodul entweder am Grundmodul 15 oder am Erweiterungsmodul 17 angebracht werden.

Prinzipiell kann das Sicherheitssystem 1 gemäß Figur 2 auch ohne Grundmodul 15 und Griffmodul 16 betrieben werden, so dass nur das Erweiterungsmodul 17 vorgesehen ist, an dem dann das Verbindungsmodul 11 angebracht ist. Das Sicherheitssystem 1 bildet dann kein Sicherheitszuhaltesystem sondern ein Sicherheits-I/0-System.

### Bezugszeichenliste

- (1): Sicherheitssystem
- (2): Sicherheitsmodul
- (3): Anlage
- (4): Steuerung
- (5): Busmodul
- (6): Datenverbindung
- (7): Datenverbindung
- (7'): Datenverbindung
- (8): Erweiterte-Realität-Einheit
- (9): Kamera
- (10): Projektionseinheit
- (11): Verbindungsmodul
- (12): berührungslose Datenverbindung
- (13): QR-Code
- (14): Schnittstelle
- (15): Grundmodul
- (16): Griffmodul
- (17): Erweiterungsmodul
- (18): Erweiterungsmodul
- (19): Signalgeber

## Patentansprüche

1. Sicherheitszuhaltesystem mit wenigstens einem Sicherheitsmodul (2), welches einer von einer Steuerung (4) gesteuerten Anlage (3) zugeordnet ist, **dadurch gekennzeichnet, dass** eine tragbare Erweiterte-Realität-Einheit (8) vorgesehen ist, welche eine Kamera (9) und eine Projektionseinheit (10) aufweist, dass das Sicherheitsmodul (2) ein Verbindungsmodul (11) aufweist, welches ausgebildet ist, eine Datenverbindung (12) mit der Erweiterte-Realität-Einheit (8) und weiterhin eine Datenverbindung (6, 7) mit der Steuerung (4) bereitzustellen, dass mit der Erweiterte-Realität-Einheit (8) ein die Anlage (3) kennzeichnender Code erfasst und an das Verbindungsmodul (11) übertragen wird, dass abhängig vom erfassten Code der Erweiterte-Realität-Einheit (8) Kenngrößen von Bedienelementen zugeführt sind, dass anhand der Kenngrößen die Bedienelemente mit der Projektionseinheit (10) der Erweiterte-Realität-Einheit (8) visualisiert sind, dass Betätigungen der virtuellen Bedienelemente mittels der Erweiterte-Realität-Einheit (8) erfasst sind und daraus Betätigungsdaten generiert sind, dass eine Übertragung der Betätigungsdaten über das Verbindungsmodul (11) an die Steuerung (4) erfolgt, wobei im Sicherheitssystem (1) selbsttätig Einstellungen in Abhängigkeit der Betätigungsdaten durchgeführt sind, und dass das Sicherheitssystem (1) ein Busmodul (5) aufweist, über welches eine Datenverbindung (6, 7) zwischen dem Verbindungsmodul (11) und der Steuerung (4) gebildet wird.

2. Sicherheitszuhaltesystem nach Anspruch 1, **dadurch gekennzeichnet, dass** im Busmodul (5) ein Datenprotokoll des Verbindungsmoduls (11) zur Kommunikation mit der Erweiterte-Realität-Einheit (8) in ein Datenprotokoll zur Kommunikation mit der Steuerung (4) umgesetzt ist.

3. Sicherheitszuhaltesystem nach einem der Ansprüche 1 oder 2, **dadurch gekennzeichnet, dass** im Verbindungsmodul (11) eine das Sicherheitssystem (1) kennzeichnende Kennung hinterlegt ist, welche mit der Steuerung (4) abgleichbar ist.

4. Sicherheitszuhaltesystem nach Anspruch 3, **dadurch gekennzeichnet, dass** im Verbindungsmodul (11) die Kennung dem von der Erweiterte-Realität-Einheit (8) gelesenen Code zugeordnet ist.

5. Sicherheitszuhaltesystem nach einem der Ansprüche 1 bis 4, **dadurch gekennzeichnet, dass** die Anlage (3) anhand eines QR-Codes (13), eines Matrix-Codes oder eines Barcodes identifizierbar ist.

6. Sicherheitszuhaltesystem nach einem der Ansprüche 1 bis 5, **dadurch gekennzeichnet, dass** die Kenngrößen der Bedienelemente von dem Verbindungsmodul (11) oder einer externen Einheit an die Erweiterte-Realität-Einheit (8) übertagen sind.

7. Sicherheitszuhaltesystem nach einem der Ansprüche 1 bis 6, **dadurch gekennzeichnet, dass** das Verbindungsmodul (11) und/oder die Erweiterte-Realität-Einheit (8) eine Schnittstelle (14) zur Herstellung einer Datenverbindung mit der externen Einheit aufweist.

8. Sicherheitszuhaltesystem nach einem der Ansprüche 1 bis 7, **dadurch gekennzeichnet, dass** die Erweiterte-Realität-Einheit (8) in Form einer Datenbrille ausgebildet ist.

9. Sicherheitszuhaltesystem nach einem der Ansprüche 1 bis 8, **dadurch gekennzeichnet, dass** virtuelle Bedienelemente in ein mit der Erweiterte-Realität-Einheit (8) sichtbares Umgebungsbild eingeblendet sind.

10. Sicherheitszuhaltesystem nach einem der Ansprüche 1 bis 9, **dadurch gekennzeichnet, dass** die virtuellen Bedienelemente durch Gestensteuerungen einstellbar sind.

11. Sicherheitszuhaltesystem nach einem der Ansprüche 1 bis 10, **dadurch gekennzeichnet, dass** das Verbindungsmodul (11) ein Submodul eines Sicherheitsmoduls (2) bildet.

12. Sicherheitszuhaltesystem nach Anspruch 11 **dadurch gekennzeichnet, dass** das Verbindungsmodul (11) mit dem Sicherheitsmodul (2) verbindbar ist.

## Claims

1. Safety interlock system comprising at least one safety module (2) which is associated with a system (3) controlled by a controller (4), **characterised in that** a portable augmented reality unit (8) is provided, which comprises a camera (9) and a projection unit (10), **in that** the safety module (2) comprises a connection module (11) which is configured to establish a data connection (12) with the augmented reality unit (8) and, furthermore, a data connection (6, 7) with the control unit (4), that a code identifying the system (3) is detected by the augmented reality unit (8) and transmitted to the connection module (11), that, depending on the detected code, parameters of the control elements are supplied to the augmented reality unit (8) are supplied with parameters of control elements, that on the basis of the parameters the control elements are visualised by the projection unit (10) of the augmented reality unit (8), that actuations of the virtual control elements are detected by means of the augmented reality unit (8) are detected and actuation data is generated therefrom, that the actuation data is transmitted via the connection module (11) to the control unit (4), whereby settings are automatically carried out in the safety system (1) depending on the actuation data, and that the safety system (1) comprises a bus module (5) via which a data connection (6, 7) is established between the connection module (11) and the control unit (4).

2. Safety interlock system according to claim 1, **characterised in that**, within the bus module (5), a data protocol of the connection module (11) for communication with the augmented reality unit (8) is converted into a data protocol for communication with the controller (4).

3. Safety interlock system according to one of claims 1 or 2, **characterised in that** an identifier characterising the safety system (1) is stored in the connection module (11), which identifier can be synchronised with the controller (4).

4. Safety interlock system according to claim 3, **characterised in that**, in the connection module (11), the identifier is assigned to the code read by the augmented reality unit (8).

5. Safety interlock system according to any one of claims 1 to 4, **characterised in that** the system (3) is identifiable by means of a QR code (13), a matrix code or a barcode.

6. Safety interlock system according to any one of claims 1 to 5, **characterised in that** the parameters of the operating elements are transmitted from the connection module (11) or an external unit to the augmented reality unit (8).

7. Safety interlock system according to any one of claims 1 to 6, **characterised in that** the connection module (11) and/or the augmented reality unit (8) comprises an interface (14) for establishing a data connection with the external unit.

8. Safety interlock system according to any one of claims 1 to 7, **characterised in that** the augmented reality unit (8) is designed in the form of smart glasses.

9. Safety interlock system according to any one of claims 1 to 8, **characterised in that** virtual control elements are superimposed onto an image of the surroundings visible via the augmented reality unit (8).

10. Safety interlock system according to any one of claims 1 to 9, **characterised in that** the virtual control elements are adjustable by means of gesture controls.

11. Safety interlock system according to any one of claims 1 to 10, **characterised in that** the connection module (11) forms a submodule of a safety module (2).

12. Safety interlock system according to claim 11, **characterised in that** the connection module (11) is connectable to the safety module (2).

## Revendications

1. Système de verrouillage de sécurité comprenant au moins un module de sécurité (2) associé à un système (3) commandé par un contrôleur (4), **caractérisé en ce qu'**il est prévu une unité de réalité augmentée portable (8) qui comprend une caméra (9) et une unité de projection (10), **en ce que** le module de sécurité (2) comprend un module de connexion (11) configuré pour établir une connexion de données (12) avec l'unité de réalité augmentée (8) et, en outre, une connexion de données (6, 7) avec l'unité de commande (4), **en ce qu'**un code identifiant le système (3) est détecté par l'unité de réalité augmentée (8) et transmis au module de connexion (11), **en ce que**, en fonction du code détecté, des paramètres des éléments de commande sont fournis à l'unité de réalité augmentée (8), que, sur la base de ces paramètres, les éléments de commande sont visualisés par l'unité de projection (10) de l'unité de réalité augmentée (8), que les actionnements des éléments de commande virtuels sont détectés au moyen de l'unité de réalité augmentée (8) et que des données d'actionnement sont générées à partir de ceux-ci, que les données d'actionnement sont transmises via le module de connexion (11) vers l'unité de commande (4), ce qui entraîne la réalisation automatique de réglages dans le système de sécurité (1) en fonction des données d'actionnement, et **en ce que** le système de sécurité (1) comprend un module de bus (5) par l'intermédiaire duquel une connexion de données (6, 7) est établie entre le module de connexion (11) et l'unité de commande (4).

2. Système de verrouillage de sécurité selon la revendication 1, **caractérisé en ce que**, au sein du module de bus (5), un protocole de données du module de connexion (11) destiné à la communication avec l'unité de réalité augmentée (8) est converti en un protocole de données destiné à la communication avec le contrôleur (4).

3. Système de verrouillage de sécurité selon l'une des revendications 1 ou 2, **caractérisé en ce qu'**un identifiant caractérisant le système de sécurité (1) est stocké dans le module de connexion (11), lequel identifiant peut être synchronisé avec le contrôleur (4).

4. Système de verrouillage de sécurité selon la revendication 3, **caractérisé en ce que**, dans le module de connexion (11), l'identifiant est attribué au code lu par l'unité de réalité augmentée (8).

5. Système de verrouillage de sécurité selon l'une quelconque des revendications 1 à 4, **caractérisé en ce que** le système (3) est identifiable au moyen d'un code QR (13), d'un code matriciel ou d'un code-barres.

6. Système de verrouillage de sécurité selon l'une quelconque des revendications 1 à 5, **caractérisé en ce que** les paramètres des éléments de commande sont transmis depuis le module de connexion (11) ou une unité externe vers l'unité de réalité augmentée (8).

7. Système de verrouillage de sécurité selon l'une quelconque des revendications 1 à 6, **caractérisé en ce que** le module de connexion (11) et/ou l'unité de réalité augmentée (8) comprend une interface (14) pour établir une connexion de données avec l'unité externe.

8. Système de verrouillage de sécurité selon l'une quelconque des revendications 1 à 7, **caractérisé en ce que** l'unité de réalité augmentée (8) est conçue sous la forme de lunettes intelligentes.

9. Système de verrouillage de sécurité selon l'une quelconque des revendications 1 à 8, **caractérisé en ce que** des éléments de commande virtuels sont superposés à une image de l'environnement visible via l'unité de réalité augmentée (8).

10. Système de verrouillage de sécurité selon l'une quelconque des revendications 1 à 9, **caractérisé en ce que** les éléments de commande virtuels sont réglables au moyen de commandes gestuelles.

11. Système de verrouillage de sécurité selon l'une quelconque des revendications 1 à 10, **caractérisé en ce que** le module de connexion (11) forme un sous-module d'un module de sécurité (2).

12. Système de verrouillage de sécurité selon la revendication 11, **caractérisé en ce que** le module de connexion (11) peut être connecté au module de sécurité (2).
